# EUROPÄISCHE PATENTSCHRIFT

(11) **EP 1 519 089 B1**
(45) Veröffentlichungstag und Bekanntmachung des Hinweises auf die Patenterteilung: **05.07.2006**
(21) Anmeldenummer: 04104635.0
(22) Anmeldetag: 23.09.2004
(51) Int. Cl.: F16K 11/07, F16K 27/04

(54) **Ventil und Verfahren zu einer druckdichten, reibungsarmen Anordnung eines dazugehörigen Ventilschiebers in einem Gehäuse**
Valve and method for a pressure-tight, low-friction arrangement of a spool in a housing
Soupape et méthode pour le montage d'un tiroir dans un boitier de manière étanche et faible-friction

(30) Priorität: 25.09.2003 DE 10344407
(43) Veröffentlichungstag der Anmeldung: 30.03.2005
(73) Patentinhaber: Rexroth Mecman GmbH, 30880 Laatzen (DE)
(72) Erfinder: Brandes, Wolfgang, 30419, Hannover (DE); Liesenhoff, Thomas, 30159, Hannover (DE); Meyer, Ernst-August, 30974, Wennigsen (DE); Fortmann, Norbert, 30163, Hannover (DE)
(74) Vertreter: Kietzmann, Lutz

(56) Entgegenhaltungen:
- DE-A- 19 837 558
- FR-A- 2 587 779
- US-A- 3 958 792
- PATENT ABSTRACTS OF JAPAN Bd. 2000, Nr. 22, 9. März 2001 (2001-03-09) & JP 2001 137338 A (KOOKI ENGINEERING:KK), 22. Mai 2001 (2001-05-22)

## Beschreibung

Die Anmeldung bezieht sich auf ein Ventil sowie ein Verfahren zu einer druckdichten, reibungsarmen Anordnung eines dazugehörigen Ventilschiebers in einem Gehäuse gemäß dem Oberbegriff des Anspruchs 1 bzw. 12.

Auf dem hier interessierenden Gebiet von Schieberventilen unterscheidet man bezüglich der Dichtung zwei Typen von Ventilen, nämlich Ventile, die über einen Dichtring verfügen (der entweder am Ventilschieber oder am Dichtgehäuse angebracht sein kann) und Ventile, bei denen kein Dichtring vorgesehen ist. Bei Ventilen des letztgenannten Typs ist es von eminenter Bedeutung, dass der Ventilschieber und der Innenraum des den Ventilschieber umgebenden Ventilgehäuses möglichst passgenau sein müssen, da die Reibung und die Druckdichtheit eines Schieberventils dann im Wesentlichen vom Spaltmaß zwischen Gehäuse und Schieber abhängig sind.

Die bisherigen Lösungsansätze auf diesem Gebiet waren zum Einen, dass der Schieber und das Gehäuse paarig eingeschliffen wurden, oder dass der Schieber und das Gehäuse mit einer sehr geringen Toleranz, die häufig nur zwischen 0,001 und 0,002 mm betrug, zueinander passend gefertigt wurden. Diese Lösungen sind zum einen jedoch sehr zeit- und materialintensiv, zum Anderen erfordert dies höchste Präzision, ohne dass in allen Fällen wirklich zufriedenstellende Passgenauigkeiten erreicht werden können.

Ein Ventil mit den Merkmalen des Oberbegriffs des Anspruchs 1 ist in Dokument US 3958 792 beschrieben.

Es stellt sich daher die Aufgabe, eine Vorrichtung sowie ein Verfahren zu einer druckdichten, reibungsarmen Anordnung eines Ventilschiebers in einem Gehäuse zu schaffen, bei der eine druckdichte und reibungsarme Einpassung des Ventilschiebers in das Ventilgehäuse auf einfache Weise erreicht werden kann.

Zur Lösung dieser Aufgabe wird ein Ventil mit den Merkmalen des Anspruchs 1 sowie ein Verfahren zu einer druckdichten, reibungsarmen Anordnung eines Ventilschiebers in einem Gehäuse mit den Merkmalen des Anspruchs 12 vorgeschlagen.

Gemäß Anspruch 1 umfasst ein erfindungsgemäßes Ventil einen Ventilschieber sowie ein im zusammengesetzten Zustand den Ventilschieber umgebendes Ventilgehäuse mit einer röhrenförmig verlaufenden Innenaussparung, wobei das Ventilschiebermaterial zumindest in den im zusammengesetzten Zustand an das Ventilgehäuse angrenzenden Bereichen ein geringeres Elastizitätsmodul und einen höheren Wärmeausdehnungskoeffizienten besitzt als das an die Innenaussparung des Ventilgehäuses angrenzende Ventilgehäusematerial, und ist durch dem gemäß des kennzeichnenden Teils des Anspruchs 1 bereitgestellt.

Das an die Innenaussparung des Ventilgehäuses angrenzende Ventilgehäusematerial besitzt vorzugsweise ein Elastizitätsmodul von ≥ 0,5 x 10⁻⁵ N/mm² bis ≤ 10 x 10⁵ N/mm², noch bevorzugt von ≥ 0,75 x 10⁻⁵ N/mm² bis ≤ 7,5 x 10⁻⁵ N/mm², noch bevorzugt von ≥ 1 x 10⁻⁵ N/mm² bis ≤ 5 x 10⁻⁵ N/mm², noch bevorzugt von ≥ 1,25 x 10⁻⁵ N/mm² bis ≤ 3 x 10⁻⁵ N/mm² sowie am meisten bevorzugt von ≥ 1,5 x 10⁻⁵ N/mm² bis ≤ 2,5 x 10⁻⁵ N/mm².

Das Ventilschiebermaterial besitzt zumindest in den im zusammengesetzten Zustand an das Ventilgehäuse angrenzenden Bereichen vorzugsweise ein Elastizitätsmodul von Elastizitätsmodul von ≥ 0,25 x 10³ N/mm² bis ≤ 10 x 10³ N/mm², noch bevorzugt von ≥ 0,35 x 10³ N/mm² bis ≤ 7,5 x 10³ N/mm², noch bevorzugt von ≥ 0,5 x 10³ N/mm² bis ≤ 5 x 10³ N/mm², noch bevorzugt von ≥ 0,6 x 10³ N/mm² bis ≤ 3 x 10³ N/mm² sowie am meisten bevorzugt von ≥ 0,75 x 10³ N/mm² bis ≤ 2,5 x 10³ N/mm².

Das Verhältnis von Elastizitätsmodul des Ventilschiebermaterial zumindest in den im zusammengesetzten Zustand an das Ventilgehäuse angrenzenden Bereichen zu Elastizitätsmodul des an die Innenaussparung des Ventilgehäuses angrenzende Ventilgehäusematerials ist bevorzugt von ≥1:10 bis ≤ 1:1000, noch bevorzugt von ≥1:25 bis ≤ 1:750, noch bevorzugt von ≥1:50 bis ≤ 1:500, noch bevorzugt von ≥1:75 bis ≤ 1:300, sowie am meisten bevorzugt von bevorzugt von ≥1:100 bis ≤ 1:200.

Das an die Innenaussparung des Ventilgehäuses angrenzende Ventilgehäusematerial besitzt vorzugsweise einen Wärmeausdehnungskoeffizienten von ≥ 1 x 10⁻⁶ 1/K bis ≤ 100 x 10⁻⁶ 1/K, noch bevorzugt von ≥ 2,5 x 10⁻⁶ 1/K bis ≤ 75 x 10⁻⁶ 1/K, noch bevorzugt von ≥ 5 x 10⁻⁶ N/mm² bis ≤ 50 x 10⁻⁶ 1/K, noch bevorzugt von ≥ 10 x 10⁻⁶ 1/K bis ≤ 25 x 10⁻⁵ 1/K sowie am meisten bevorzugt von ≥ 12 x 10⁻⁶ 1/K bis ≤ 20 x 10⁻⁶ 1/K.

Das Ventilschiebermaterial besitzt zumindest in den im zusammengesetzten Zustand an das Ventilgehäuse angrenzenden Bereichen vorzugsweise einen Wärmeausdehnungskoeffizienten von ≥ 1 x 10⁻⁵ 1/K bis ≤ 100 x 10⁻⁵ 1/K, noch bevorzugt von ≥ 2,5 x 10⁻⁵ 1/K bis ≤ 75 x 10⁻⁵ 1/K, noch bevorzugt von ≥ 5 x 10⁻⁵ N/mm² bis ≤ 60 x 10⁻⁵ 1/K, noch bevorzugt von ≥ 10 x 10⁻⁵ 1/K bis ≤ 40 x 10⁻⁵ 1/K sowie am meisten bevorzugt von ≥ 12 x 10⁻⁵ 1/K bis ≤ 30 x 10⁻⁵ 1/K.

Das Verhältnis von Wärmeausdehnungskoeffizient des an die Innenaussparung des Ventilgehäuses angrenzende Ventilgehäusematerials zu Wärmeausdehnungskoeffizient des Ventilschiebermaterial zumindest in den im zusammengesetzten Zustand an das Ventilgehäuse angrenzenden Bereichen ist bevorzugt von >1:1 bis ≤ 1:100, noch bevorzugt von ≥1:2 bis ≤ 1:75, noch bevorzugt von ≥1:5 bis ≤ 1:50, noch bevorzugt von ≥1:7,5 bis ≤ 1:25, sowie am meisten bevorzugt von bevorzugt von ≥1:10 bis ≤ 1:15.

In einer bevorzugten Ausführungsform besteht das Gehäuse aus einem metallischen Material, welches vorzugsweise in einem Sinterverfahren hergestellt wird.

In einer weiteren bevorzugten Ausführungsform besteht der Ventilschieber zumindest in Teilbereichen aus einem thermoplastischen Material, welches vorzugsweise durch Spritzguss ausgeformt wird.

In einer weiteren bevorzugten Ausführungsform ist der Ventilschieber nur in den im zusammengesetzten Zustand an das Ventilgehäuse angrenzenden Bereichen aus einem Material, welches ein geringeres Elastizitätsmodul und einen höheren Wärmeausdehnungskoeffizienten besitzt als das an die Innenaussparung des Ventilgehäuses angrenzende Ventilgehäusematerial, in den übrigen Bereichen aber aus einem ähnlichen oder dem gleichen Material wie das an die Innenaussparung des Ventilgehäuses angrenzende Ventilgehäusematerial. Bevorzugt werden die erstgenannten Bereiche auf den Ventilgrundkörper (d.h. die übrigen Bereiche des Ventilschiebers) aufgebracht, vorzugsweise aufgespritzt oder aufgeschnappt.

Gemäß Anspruch 12 umfasst ein Verfahren zur druckdichten, reibungsarmen Anordnung eines Ventilschiebers in einem Ventilgehäuse eines erfindungsgemäßen Ventils die Schritte:
(a) Einpressen des Ventilschiebers in die Innenaussparung des Ventilgehäuses
(b) Erwärmen zumindest des Ventilschiebers und des Ventilgehäuses über den Fließpunkt des Schiebermaterials zumindest des Bereichs des Ventilschiebers, welcher im zusammengesetzten Zustand an das Ventilgehäuse angrenzt
(c) Abkühlen

Gemäß einer bevorzugten Ausführungsform des Verfahrens wird dabei die in Schritt (b) zugeführte Wärmemenge und/oder die Zeitspanne des Erwärmens so bemessen, dass sich nach dem Abkühlen ein gewünschtes Spaltmaß zwischen Ventilschieber und Ventilgehäuse einstellt.

Beim Einpressen des Ventilschiebers, dessen Material zumindest in den im zusammengesetzten Zustand an das Ventilgehäuse angrenzenden Bereichen ein geringeres Elastizitätsmodul und einen höheren Wärmeausdehnungskoeffizienten besitzt als das an die Innenaussparung des Ventilgehäuses angrenzende Ventilgehäusematerial, in das Ventilgehäuse werden diese Bereiche unter Spannung gesetzt. Zum Abbau dieser Spannung werden nun Ventilschieber und Ventilgehäuse soweit erwärmt, bis die Fließspannungen (erzeugt durch die unterschiedlichen Wärmeausdehnungskoeffizienten der beiden Materialien) erreicht wird und es zu einer plastischen Verformung in den vorgespannten Bereichen des Schiebers kommt. Jedoch bleibt eine elastische Restvorspannung auch in dem erwärmten Zustand bestehen. Da die obengenannten Bereiche des Ventilschiebers jedoch über einen höheren Wärmeausdehnungskoeffizienten verfügen als die angrenzenden Bereiche des Ventilgehäuses, werden diese beim Abkühlen auch eine stärkere Materialwärmeänderung durchlaufen, wodurch die Spannung zwischen Ventilschieber und Ventilgehäuse im Wesentlichen beseitigt werden können. Somit wird durch einfaches Erwärmen und Abkühlen eine Einpassung des Ventilschiebers in das Ventilgehäuse erreicht.

Dadurch dass das entstehende Spaltmaß im Wesentlichen aus zum Einen durch das Wechselspiel zwischen den unterschiedlichen Wärmeausdehnungskoeffizienten und Elastizitätsmodule der aneinander angrenzenden Materialen sowie zum Anderen durch die zugeführte Wärmemenge und/ oder die Zeitspanne der Erwärmung resultiert, ergibt sich folgendes:
- Die Fertigungstoleranzen von Ventilgehäuse und/oder Ventilschieber können großzügiger bemessen sein, da die Fertigungstoleranzen das entstehende Spaltmaß nicht oder nur stark eingeschränkt beeinflussen. In der Praxis können bei gleichem erzielbaren Spaltmaß die Fertigungstoleranzen um den Faktor 50 größer sein.
- Eine evtl. mechanisch durchgeführte Passung von Ventilgehäuse und/oder Ventilschieber aneinander durch Läppen, Polieren, Schleifen o.ä. erübrigt sich
- Das Spaltmaß kann bei bekannten Materialcharakteristika einfach durch kontrollierte Erwärmung genau eingestellt werden, so dass Ventile mit verbesserten Eigenschaften zugänglich sind.
- Als weiterer Vorteil kann der Schieber ohne spannende Nacharbeit in einem Spritzgussverfahren und das Gehäuse in einem Sinterverfahren hergestellt werden.

Die vorgenannten sowie die beanspruchten und in dem Ausführungsbeispiel beschriebenen erfindungsgemäß zu verwendenden Bauteile unterliegen in ihrer Größe, Formgestaltung, Materialauswahl und technischen Konzeption keinen besonderen Ausnahmebedingungen, so dass die in diesem Anwendungsgebiet bekannten Auswahlkriterien uneingeschränkt Anwendung finden können.

Weitere Einzelheiten, Merkmale und Vorteile des Gegenstands der Erfindung ergeben sich aus den Unteransprüchen sowie aus der nachfolgenden Beschreibung der zugehörigen Zeichnungen, in denen - beispielhaft - ein Ausführungsbeispiel des erfindungsgemäßen Ventils dargestellt ist.

In der Zeichnung zeigen:
- Fig. 1: einen schematischen Querschnitt durch einen erfindungsgemäßen Ventilschieber und ein Ventilgehäuse vor dem Einpassen des Ventilschiebers in das Ventilgehäuse; sowie
- Fig. 2: einen schematischen Querschnitt durch einen erfindungsgemäßen Ventilschieber und ein Ventilgehäuse nach dem Einpassen des Ventilschiebers in das Ventilgehäuse.

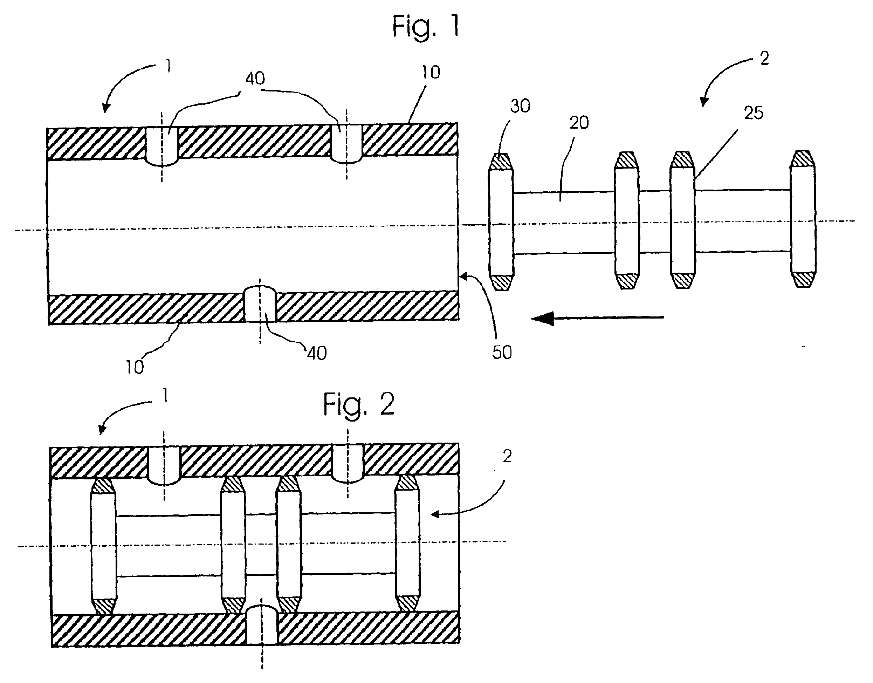

Wie in Fig. 1 und 2 zu sehen, beinhaltet ein erfindungsgemäßes Ventil ein Ventilgehäuse 1 und einen Ventilschieber 2. Der Übersichtlichkeit halber wurden zusätzliche benötigte - an sich bekannte - Komponenten des Ventils weggelassen.

Das Ventilgehäuse 1 besteht vorzugsweise aus einem metallischen Material 10 und weist mehrere Steuerkanäle 40 auf, die durch den Ventilschieber 2 steuerbar sind, sowie eine rohrförmige Innenaussparung (Innenkanal) 50 auf. Bevorzugt ist das Ventilgehäuse durch ein Metal-Injection-Moulding (MIM)-Verfahren herstellbar. In den Figuren besteht das Ventilgehäuse 1 aus einem einheitlichen Material 10, jedoch kann das Ventilgehäuse auch aus zwei oder mehr Schichten oder Bereichen unterschiedlichen Materials bestehen. Bevorzugt ist jedoch zumindest der Bereich des Ventilgehäuses, der an den Innenkanal 50 angrenzt, aus einem einheitlichen Material 10 gefertigt.

Der Ventilschieber 2 besteht aus einem Ventilgrundkörper 20, welcher eine oder mehrere (in dieser Ausführungsform vier) Schiebersitzflächen 25 umfaßt. In dieser Ausführungsform ist radial auswärts der Schiebersitzflächen 25 eine Schicht 30 eines zweiten Materials aufgebracht, welches ein kleineres Elastizitätsmodul, aber eine größere Wärmedehnung besitzt als das Ventilgehäusematerial 10. Das zweite Material ist bevorzugt ein thermoplastisches Material. Bevorzugt wird es durch Aufspritzen oder Aufschnappen auf den Ventilgrundkörper 20 aufgebracht.

In der in Fig. 1 und 2 gezeigten Ausführungsform besteht der Bereich des Ventilschiebers 30, der im zusammengebauten Zustand an das Ventilgehäuse 1 angrenzt, aus einem anderen Material als der Ventilgrundkörper 20 und die Schiebersitzflächen 25. In einer bevorzugten Ausführungsform der Erfindung bestehen Ventilgrundkörper 20 und Schiebersitzflächen 25 aus demselben oder einem ähnlichen Material wie das Ventilgehäuse 10. Jedoch kann auch der gesamte Ventilschieber aus einem einheitlichen Material bestehen, oder für den Ventilgrundkörper 20 und/oder die Schiebersitzflächen 25 können auch unterschiedliche Materialien - auch unterschiedlich zum Ventilgehäusematerial 10 - gewählt werden.

Weiterhin besitzt, wie in Fig. 1 angedeutet, der Ventilschieber 2 im Ausgangszustand einen größeren maximale Außendurchmesser als der Innendurchmesser des Innenkanals 50.

Die Einpassung des Ventilschiebers 2 in das Ventilgehäuse findet nun folgendermaßen statt, dass zunächst der Ventilschieber 2, wie in Pfeilrichtung in Fig. 1 angedeutet in das Ventilgehäuse 1 eingepresst wird. Somit steht, aufgrund der unterschiedlichen Durchmesser von Ventilschieber 2 und Ventilgehäuse 1, das an das Ventilgehäuse angrenzende Material 30 des Ventilschiebers 2 unter Spannung, da es über ein kleineres Elastizitätsmodul verfügt als das Gehäusematerial 10 (Presspassung).

Ventilgehäuse 1 und Ventilschieber 2 werden nun erwärmt, bis die Fließspannungen des Steuerschiebermaterials 30 erreicht werden und es somit zu einer plastischen Verformung kommt; allerdings werden nicht alle Spannungen innerhalb des Materials 30 beseitigt. Beim Abkühlen zieht sich nun das Steuerschiebermaterial 30 stärker zurück als das Material des Ventilgehäuses 10, da es einen größeren Wärmeausdehnungskoeffizienten besitzt. Dadurch werden Restspannungen in dem Steuerschiebermaterial 30 beseitigt, zum Anderen entsteht - bei kontrollierter Wärmezugabe und/oder Wärmezugabedauer - ein genau einstellbarer Spalt zwischen dem Ventilschieber 2 und dem Ventilgehäuse 1. Auch die Abkühlung erfolgt vorzugsweise unter Kontrolle der Abkühlrate und/oder -dauer.

Nach dem Abkühlen ist somit der Ventilschieber druckdicht und reibungsarm in das Ventilgehäuse eingepasst, wie in Fig. 2 zu sehen.

In den Figuren wird ein 3/2 Wege-Ventil gezeigt. Selbstverständlich ist die vorliegende Erfindung jedoch nicht auf Ventile diesen Typs beschränkt, sondern kann in allen Bereichen Anwendung finden, bei denen eine schnelle und genaue Einpassung eines Schieberkolbens in ein Gehäuse benötigt wird.

## Patentansprüche

1. Ventil, umfassend einen Ventilschieber (2) und ein im zusammengesetzten Zustand den Ventilschieber umgebendes Ventilgehäuse (1) mit einer röhrenförmig verlaufenden Innenaussparung (50),
wobei für eine verbesserte druckdichte und reibungsarme Einpassung des Ventilschiebers (2) in das Ventilgehäuse (1) das Material des Ventilschiebers (2) zumindest in den oder dem im zusammengesetzten Zustand an das Ventilgehäuse angrenzenden Bereich/Bereichen (30) ein geringeres Elastizitätsmodul und einen höheren Wärmeausdehnungskoeffizienten besitzt als das an die Innenaussparung des Ventilgehäuses angrenzende Material (10) des Ventilgehäuses (1).
**dadurch gekennzeichnet,**
**dass** der Ventilschieber (2) im Ausgangszustand einen größeren radialen Maximaldurchmesser aufweist als der Durchmesser der Innenaussparung (50) des Ventilgehäuses (1) und durch Einpressen in das Ventilgehäuse, Erwärmen über den Fließpunkt des Schiebermaterials des Bereichs (30) des Ventilschiebers, welches im zusammengesetzten Zustand an das Ventilgehäuse angrenzt, sowie anschließendem Abkühlen in das Ventilgehäuse (1) einpaßbar ist.

2. Ventil nach Anspruch 1,
**dadurch gekennzeichnet, dass** zumindest das an die Innenaussparung des Ventilgehäuses angrenzende Ventilgehäusematerial ein Elastizitätsmodul von ≥ 0,5 x 10⁻⁵ N/mm² bis ≤ 10 x 10⁻⁵ N/mm², noch bevorzugt von ≥ 0,75 x 10⁵ N/mm² bis ≤ 7,5 x 10⁵ N/mm², noch bevorzugt von ≥ 1 x 10⁻⁵ N/mm² bis ≤ 5 x 10⁵ N/mm², noch bevorzugt von ≥ 1,25 x 10⁵ N/mm² bis ≤ 3 x 10⁻⁵ N/mm² sowie am meisten bevorzugt von ≥ 1,5 x 10⁻⁵ N/mm² bis ≤ 2,5 x 10⁻⁵ N/mm² besitzt.

3. Ventil nach Anspruch 1 oder 2
**dadurch gekennzeichnet, dass** zumindest das Ventilschiebermaterial in den im zusammengesetzten Zustand an das Ventilgehäuse angrenzenden Bereichen ein Elastizitätsmodul von Elastizitätsmodul von ≥ 0,25 x 10³ N/mm² bis ≤ 10 x 10³ N/mm², noch bevorzugt von ≥ 0,35 x 10³ N/mm² bis ≤ 7,5 x 10³ N/mm², noch bevorzugt von ≥ 0,5 x 10³ N/mm² bis ≤ 5 x 10³ N/mm², noch bevorzugt von ≥ 0,6 x 10³ N/mm² bis ≤ 3 x 10³ N/mm² sowie am meisten bevorzugt von ≥ 0,75 x 10³ N/mm² bis ≤ 2,5 x 10³ N/mm² besitzt.

4. Ventil nach einem der Ansprüche 1 bis 3,
**dadurch gekennzeichnet, dass** das Verhältnis von Elastizitätsmodul des Ventilschiebermaterial zumindest in den im zusammengesetzten Zustand an das Ventilgehäuse angrenzenden Bereichen zum Elastizitätsmodul zumindest des an die Innenaussparung des Ventilgehäuses angrenzenden Ventilgehäusematerials von ≥1:10 bis ≤ 1:1000, noch bevorzugt von ≥1:25 bis ≤ 1:750, noch bevorzugt von ≥1:50 bis ≤ 1:500, noch bevorzugt von ≥1:75 bis ≤ 1:300, sowie am meisten bevorzugt von bevorzugt von ≥1:100 bis ≤ 1 :200 beträgt.

5. Ventil nach einem der Ansprüche 1 bis 4,
**dadurch gekennzeichnet, dass** zumindest das an die Innenaussparung des Ventilgehäuses angrenzende Ventilgehäusematerial einen Wärmeausdehnungskoeffizienten von ≥ 1 x 10⁻⁶ 1/K bis ≤ 100 x 10⁻⁶ 1/K, noch bevorzugt von ≥ 2,5 x 10⁻⁶ 1/K bis ≤ 75 x 10⁻⁶ 1/K, noch bevorzugt von ≥ 5 x 10⁻⁶ N/mm² bis ≤ 50 x 10⁻⁶ 1/K, noch bevorzugt von ≥ 10 x 10⁻⁶ 1/K bis ≤ 25 x 10⁻⁵ 1/K sowie am meisten bevorzugt von ≥ 12 x 10⁻⁶ 1/K bis ≤ 20 x 10⁻⁶ 1/K besitzt.

6. Ventil nach einem der Ansprüche 1 bis 5,
**dadurch gekennzeichnet, dass** zumindest das Ventilschiebermaterial zumindest in den im zusammengesetzten Zustand an das Ventilgehäuse angrenzenden Bereichen einen Wärmeausdehnungskoeffizienten von ≥ 1 x 10⁻⁵ 1/K bis 5 100 x 10⁻⁵ 1/K, noch bevorzugt von ≥ 2,5 x 10⁻⁵ 1/K bis ≤ 75 x 10⁻⁵ 1/K, noch bevorzugt von ≥ 5 x 10⁻⁵ 1/K bis ≤ 60 x 10⁻⁵ 1/K, noch bevorzugt von ≥ 10 x 10⁻⁵ 1/K bis ≤ 40 x 10⁻⁵ 1/K sowie am meisten bevorzugt von ≥ 12 x 10⁻⁵ 1/K bis ≤ 30 x 10⁻⁵ 1/K besitzt.

7. Ventil nach einem der Ansprüche 1 bis 6,
**dadurch gekennzeichnet, dass** das Verhältnis von Wärmeausdehnungskoeffizient zumindest des an die Innenaussparung des Ventilgehäuses angrenzende Ventilgehäusematerials zum Wärmeausdehnungskoeffizient des Ventilschiebermaterials zumindest in den im zusammengesetzten Zustand an das Ventilgehäuse angrenzenden Bereichen von >1:1 bis ≤ 1:100, noch bevorzugt von ≥1:2 bis ≤ 1:75, noch bevorzugt von ≥1:5 bis ≤ 1:50, noch bevorzugt von ≥1:7,5 bis ≤ 1 :25, sowie am meisten bevorzugt von bevorzugt von ≥1:10 bis ≤ 1:15 beträgt.

8. Ventil nach einem der Ansprüche 1 bis 7,
**dadurch gekennzeichnet, dass** das Ventilgehäuse (1) aus einem metallischen Material besteht, welches vorzugsweise in einem Metal-Injection-Moulding (MIM) Verfahren hergestellt ist.

9. Ventil nach einem der Ansprüche 1 bis 8,
**dadurch gekennzeichnet, dass** der Ventilschieber (2) zumindest in Teilbereichen (30) aus einem thermoplastischen Material besteht, welches vorzugsweise durch Spritzguss ausgeformt ist.

10. Ventil nach einem der Ansprüche 1 bis 9,
**dadurch gekennzeichnet, dass** das Material des Ventilschiebers (2) in den im zusammengesetzten Zustand an das Ventilgehäuse angrenzenden Bereichen (30) ein geringeres Elastizitätsmodul und einen höheren Wärmeausdehnungskoeffizienten besitzt als das an die Innenaussparung (50) des Ventilgehäuses (1) angrenzende Material des Ventilgehäuses (1), in den übrigen Bereichen (20,25) aber aus einem ähnlichen, vorzugsweise dem gleichen Material wie das an die Innenaussparung (50) des Ventilgehäuses (1) angrenzende Ventilgehäusematerial (10) besteht.

11. Ventil nach Anspruch 10,
**dadurch gekennzeichnet, dass** die Bereiche, welche aus einem ähnlichen, vorzugsweise aus dem gleichen Material wie das an die Innenaussparung (50) des Ventilgehäuses (1) angrenzende Ventilgehäusematerial (10) bestehen, einen Ventilgrundkörper (20, 25) bilden und die Bereiche (30), welche aus einem Material mit ein geringeres Elastizitätsmodul und einen höheren Wärmeausdehnungskoeffizienten als das an die Innenaussparung (50) des Ventilgehäuses (1) angrenzende Ventilgehäusematerial (10) bestehen, auf diesem Ventilgrundkörper (20,25) aufgebracht, bevorzugt aufgespritzt oder aufgeschnappt sind.

12. Verfahren zur druckdichten, reibungsarmen Anordnung eines Ventilschiebers in einem Ventilgehäuse eines Ventils gemäß der Ansprüche 1 bis 11, umfassend die Schritte:
(a) Einpressen des Ventilschiebers (2) in die Innenaussparung (50) des Ventilgehäuses (1) unter Bildung einer Presspassung,
(b) Erwärmen zumindest des Ventilschiebers (2) und des Ventilgehäuses (1) über den Fließpunkt des Schiebermaterials zumindest des Bereichs (30) des Ventilschiebers (2), welcher im zusammengesetzten Zustand an das Ventilgehäuse (1) angrenzt, und
(c) Abkühlen.

13. Verfahren nach Anspruch 12, wobei die in Schritt (b) zugeführte Wärmemenge und/oder die Zeitspanne des Erwärmens so bemessen wird, dass sich nach dem Abkühlen ein gewünschtes Spaltmaß zwischen Ventilschieber und Ventilgehäuse einstellt.

14. Verfahren zur Herstellung eines Ventilschiebers (2) gemäß einem der Ansprüche 1 bis 11 und/oder zur Verwendung in einem Verfahren gemäß Anspruch 12 oder 13, wobei der Ventilschieber aus einem Ventilgrundkörper (20,25) besteht,
**dadurch gekennzeichnet, dass** auf den Ventilgrundkörper (20,25), insbesondere auf den oder die Schiebersitzflächen (25), mindestens eine Schicht (30) eines Materials aufgetragen, insbesondere aufgespritzt und/oder aufgeschnappt wird, welches ein geringeres Elastizitätsmodul und einen höheren Wärmeausdehnungskoeffizienten besitzt als das an die Innenaussparung (50) des Ventilgehäuses (1) angrenzende Ventilgehäusematerial (10).

## Claims

1. A valve comprising a valve spool (2) and a valve housing (1) surrounding the valve spool in the assembled state and having a tube-like inner space (50),
wherein to improve the pressure-sealed and low-friction fit of the valve spool (2) in the valve housing (1), the material of the valve spool (2), at least in an area/areas (30) adjacent to the valve housing (1) in an assembled state, has a lower modulus of elasticity and a higher coefficient of thermal expansion than the material (10) of the valve housing (1) adjacent to the inner space of the valve housing,
**characterised in that**
said valve spool (2), in its original state, has a larger radial maximum diameter than the diameter of the inner space (50) of said valve housing (1) and can be made to fit into said valve housing (1) by heating it to above the yield point of the spool material of the area (30) of said valve spool adjacent to the valve housing in the assembled state, and subsequent cooling.

2. The valve according to claim 1,
**characterised in that** at least the material of the valve housing adjacent to said inner space of the valve housing has a modulus of elasticity from ≥ 0.5 x 10⁵ N/mm² to ≤ 10 x 10⁵ N/mm², preferably from ≥ 0.75 x 10⁵ N/mm² to ≤ 7.5 x 10⁵ N/mm², more preferably from ≥ 1 x 10⁵ N/mm² to ≤ 5 x 10⁵ N/mm², even more preferably from ≥ 1.25 x 10⁵ N/mm² to ≤ 3 x 10⁵ N/mm², and most preferably from ≥ 1.5 x 10⁵ N/mm² to ≤ 2.5 x 10⁵ N/mm².

3. The valve according to claim 1 or 2,
**characterised in that** at least said valve spool material in the areas adjacent to the valve housing in the assembled state has a modulus of elasticity from ≥ 0.25 x 10³ N/mm² to ≤ 10 x 10³ N/mm², preferably from ≥ 0.35 x 10³ N/mm² to ≤ 7.5 x 10³ N/mm², more preferably from ≥ 0.5 x 10³ N/mm² to ≤ 5 x 10³ N/mm², even more preferably from ≥ 0.6 x 10³ N/mm² to ≤ 3 x 10³ N/mm², and most preferably from ≥ 0.75 x 10³ N/mm² to ≤ 2.5 x 10³ N/mm².

4. The valve according to any one of claims 1 to 3,
**characterised in that** the ratio of the modulus of elasticity of the valve spool material at least in the areas adjacent to the valve housing in the assembled state to the modulus of elasticity at least of the valve housing material adjacent to the inner space of the valve housing is from ≥ 1:10 to ≤ 1:1000, preferably from ≥ 1:25 to ≤ 1:750, more preferably from ≥ 1:50 to ≤ 1:500, even more preferably from ≥ 1:75 to ≤ 1:300, and most preferably from ≥ 1:100 to ≤ 1:200.

5. The valve according to any one of claims 1 to 4,
**characterised in that** at least the valve housing material adjacent to the inner space of the valve housing has a coefficient of thermal expansion from ≥ 1 x 10⁻⁶ 1/K to ≤ 100 x 10⁻⁶ 1/K, preferably from ≥ 2.5 x 10⁻⁶ 1/K to ≤ 75 x 10⁻⁶ 1/K, more preferably from ≥ 5 x 10⁻⁶ 1/K to ≤ 50 x 10⁻⁶ 1/K, even more preferably from ≥ 10 x 10⁻⁶ 1/K to ≤ 25 x 10⁻⁶ 1/K, and most preferably from ≥ 12 x 10⁻⁶ 1/K to ≤ 20 x 10⁻⁶ 1/K.

6. The valve according to any one of claims 1 to 5,
**characterised in that** at least the valve spool material at least in the areas adjacent to the valve housing in the assembled state has a coefficient of thermal expansion from ≥ 1 x 10⁻⁵ 1/K to ≤ 100 x 10⁻⁵ 1/K, preferably from ≥ 2.5 x 10⁻⁵ 1/K to ≤ 75 x 10⁻⁵ 1/K, more preferably from ≥ 5 x 10⁻⁵ 1/K to ≤ 60 x 10⁻⁵ 1/K, even more preferably from ≥ 10 x 10⁻⁵ 1/K to ≤ 40 x 10⁻⁵ 1/K, and most preferably from ≥ 12 x 10⁻⁵ 1/K to ≤ 30 x 10⁻⁵ 1/K.

7. The valve according to any one of claims 1 to 6,
**characterised in that** the ratio of the coefficient of thermal expansion, at least of the valve housing material adjacent to the inner space of the valve housing, to the coefficient of thermal expansion of the valve spool material at least in the areas adjacent to the valve housing in the assembled state is from > 1:1 to ≤ 1:100, preferably from ≥ 1:2 to ≤ 1:75, more preferably from ≥ 1:5 to ≤ 1:50, even more preferably from ≥ 1:7,5 to ≤ 1:25, and most preferably from ≥ 1:10 to ≤ 1:15.

8. The valve according to any one of claims 1 to 7,
**characterised in that** said valve housing (1) is of a metallic material and is preferably produced by a metal-injection-moulding (MM) process.

9. The valve according to any one of claims 1 to 8,
**characterised in that** said valve spool (2) is of a thermoplastic material at least in parts (30) thereof and preferably formed by an injection-moulding process.

10. The valve according to any one of claims 1 to 9,
**characterised in that** the material of the valve spool (2), in the areas (30) adjacent to the valve housing in the assembled state, has a lower modulus of elasticity and a higher coefficient of thermal expansion than the material of the valve housing (1) adjacent to the inner space (50) of the valve housing (1) but in the remaining areas (20, 25) is of a similar, preferably the same, material as said valve housing material (10) adjacent to the inner space (50) of the valve housing (1).

11. The valve according to claim 10,
**characterised in that** the areas which are of a similar, preferably the same, material as the valve housing material (10) adjacent to the inner space (50) of the valve housing (1) form a basic valve body (20, 25) and the areas (30) which are of material with a lower modulus of elasticity and a higher coefficient of thermal expansion than the valve housing material (10) adjacent to the inner space (50) of the valve housing (1), are applied to said basic valve body (20, 25), preferably sprayed-on or snapped-on.

12. A method for arranging a valve spool in a pressure-sealed, low-friction manner in a valve housing of a valve according to claims 1 to 11, comprising the steps of:
(a) pressure inserting the valve spool (2) into the inner space (50) of the valve housing (1) to form an interference fit,
(b) heating at least the valve spool (2) and valve housing (1) to above the yield point of the spool material at least of the area (30) of the valve spool (2) adjacent to the valve housing (1) in the assembled state, and
(c) cooling.

13. The method according to claim 12, wherein the amount of heat invested and/or the period of time of heating in step (b) is dimensioned so that after cooling a desired gap size is attained between the valve spool and the valve housing.

14. A method of manufacturing a valve spool (2) according to any one of claims 1 to 11 and/or for use in a method according to claims 12 or 13, wherein the valve spool is a valve base body (20, 25),
**characterised in that** at least one layer (30) of a material is applied, in particular sprayed-on and/or snapped-on, to the valve base body (20, 25), in particular on the spool seat surface(s) (25), wherein the material (30) has a lower modulus of elasticity and a higher coefficient of thermal expansion than the valve housing material (10) adjacent to the inner space (50) of the valve housing (1).

## Revendications

1. Valve comportant un tiroir de valve (2) et un boîtier de valve (1) qui, dans l'état assemblé, entoure le tiroir de valve et est pourvu d'une échancrure intérieure (50) s'étendant en forme tubulaire,
dans laquelle, en vue d'une intégration ajustée améliorée étanche à la pression et à faible friction du tiroir de valve (2) dans le boîtier de valve (1), le matériau du tiroir de valve (2) présente, au moins dans la zone ou les zones (30) adjacente(s) au boîtier de valve dans l'état assemblée, un module d'élasticité plus faible et un coefficient de dilatation thermique plus élevé que le matériau (10) du boîtier de valve (1), qui est adjacent à l'échancrure intérieure du boîtier de valve,
**caractérisée en ce que**
dans l'état de départ, le tiroir de valve (2) présente un diamètre maximal radial supérieur au diamètre de l'échancrure intérieure (50) du boîtier de valve (1) et est susceptible d'être intégré de façon ajustée dans le boîtier de valve (1) par enfoncement à la presse dans le boîtier de valve, par échauffement au-dessus du point de fluage du matériau de la zone (30) du tiroir de valve, qui, dans l'état assemblé, est adjacent au boîtier de valve, ainsi que par refroidissement successif.

2. Valve selon la revendication 1, **caractérisée en ce qu'**au moins le matériau de boîtier de valve adjacent à l'échancrure intérieure du boîtier de valve présente un module d'élasticité de ≥ 0,5 x 10⁵ N/mm² à ≤ 10 x 10⁵ N/mm², de préférence de ≥ 0,75 x 10⁵ N/mm² à ≤ 7,5 x 10⁵ N/mm², de préférence particulière de ≥ 1 x 10⁵ N/mm² à ≤ 5 x 10⁵ N/mm², de façon encore plus préférée de ≥ 1,25 x 10⁵ N/mm² à ≤ 3 x 10⁵ N/mm², et de la façon la plus préférée de ≥ 1,5 x 10⁵ N/mm² à ≤ 2,5 x 10⁵ N/mm².

3. Valve selon l'une ou l'autre des revendications 1 et 2, **caractérisée en ce qu'**au moins le matériau de tiroir de valve dans les zones adjacentes au boîtier de valve, dans l'état assemblé, présente un module d'élasticité de ≥ 0,25 x 10³ N/mm² à ≤ 10 x 10³ N/mm², de préférence de ≥ 0,35 x 10³ N/mm² à ≤ 7,5 x 10³ N/mm², de préférence particulière de ≥ 0,5 x 10³ N/mm² à ≤ 5 x 10³ N/mm², de façon encore plus préférée de ≥ 0,6 x 10³ N/mm² à ≤ 3 x 10³ N/mm², et de la façon la plus préférée de ≥ 0,75 x 10³ N/mm² à ≤ 2,5 x 10³ N/mm².

4. Valve selon l'une des revendications 1 à 3, **caractérisée en ce que** le rapport entre le module d'élasticité du matériau de tiroir de valve, au moins dans les zones adjacentes au boîtier de valve dans l'état assemblé, et le module d'élasticité au moins du matériau de boîtier de valve adjacent à l'échancrure intérieure du boîtier de valve est de ≥ 1:10 à ≤ 1:1000, de préférence de ≥ 1:25 à ≤ 1:750, de préférence particulière de ≥ 1:50 à ≤ 1:500, de façon encore plus préférée de ≥ 1:75 à ≤ 1:300, et de la façon la plus préférée de ≥ 1:100 à ≤ 1:200.

5. Valve selon l'une des revendications 1 à 4, **caractérisée en ce qu'**au moins le matériau de boîtier de valve adjacent à l'échancrure intérieure du boîtier de valve présente un coefficient de dilatation thermique de ≥ 1 x 10⁻⁶ 1/K à ≤ 100 x 10⁻⁶ 1/K, de préférence de ≥ 2,5 x 10⁻⁶ 1/K à ≤ 75 x 10⁻⁶ 1/K, de préférence particulière de ≥ 5 x 10⁻⁶ 1/K à ≤ 50 x 10⁻⁶ 1/K, de façon encore plus préférée de ≥ 10 x 10⁻⁶ 1/K à ≤ 25 x 10⁻⁶ 1/K, et de la façon la plus préférée de ≥ 12 x 10⁻⁶ 1/K à ≤ 20 x 10⁻⁶ 1/K.

6. Valve selon l'une des revendications 1 à 5, **caractérisée en ce qu'**au moins le matériau de tiroir de valve présente, au moins dans les zones adjacentes au boîtier de valve dans l'état assemblé, un coefficient de dilatation thermique de ≥ 1 x 10⁻⁵ 1/K à ≤ 100 x 10⁻⁵ 1/K, de préférence de ≥ 2,5 x 10⁻⁵ 1/K à ≤ 75 x 10⁻⁵ 1/K, de préférence particulière de ≥ 5 x 10⁻⁵ 1/K à ≤ 60 x 10⁻⁵ 1/K, de façon encore plus préférée de ≥ 10 x 10⁻⁵ 1/K à ≤ 40 x 10⁻⁵ 1/K, et de la façon la plus préférée de ≥ 12 x 10⁻⁵ 1/K à ≤ 30 x 10⁻⁵ 1/K.

7. Valve selon l'une des revendications 1 à 6, **caractérisée en ce que** le rapport entre le coefficient de dilatation thermique au moins du matériau de boîtier de valve adjacent à l'échancrure intérieure du boîtier de valve et le coefficient de dilatation thermique du matériau de tiroir de valve au moins dans les zones adjacentes au boîtier de valve dans l'état assemblé est de ≥ 1:1 à ≤ 1:100, de préférence de ≥ 1:2 à ≤ 1:75, de préférence particulière de ≥ 1:5 à ≤ 1:50, de façon encore plus préférée de ≥ 1:7,5 à ≤ 1:25, et de la façon la plus préférée de ≥ 1:10 à ≤ 1:15.

8. Valve selon l'une des revendications 1 à 7, **caractérisée en ce que** le boîtier de valve (1) est constitué d'un matériau métallique qui est réalisé de préférence par un procédé de moulage par injection de métal (Metal-Injection-Moulding, MIM).

9. Valve selon l'une des revendications 1 à 8, **caractérisée en ce que** le tiroir de valve (2) est constitué, au moins dans des zones partielles (30), d'un matériau thermoplastique qui est de préférence moulé par injection.

10. Valve selon l'une des revendications 1 à 9, **caractérisée en ce que** le matériau du tiroir de valve (2) présente dans les zones (30) adjacentes au boîtier de valve dans l'état assemblé un module d'élasticité plus faible et un coefficient de dilatation thermique plus élevé que le matériau (10) du boîtier de valve (1) adjacent à l'échancrure intérieure (50) du boîtier de valve (1), mais dans les zones restantes (20, 25) il est constitué d'un matériau similaire, de préférence du même matériau que le matériau de boîtier de valve (10) adjacent à l'échancrure intérieure (50) du boîtier de valve (1).

11. Valve selon la revendication 10, **caractérisée en ce que** les zones qui sont constituées d'un matériau similaire, de préférence du même matériau que le matériau de boîtier de valve (10) adjacent à l'échancrure intérieure (50) du boîtier de valve (1) forment un corps de base de valve (20, 25), et les zones (30) qui sont constituées d'un matériau présentant un module d'élasticité plus faible et un coefficient de dilatation thermique plus élevé que le matériau (10) du boîtier de valve adjacent à l'échancrure intérieure (50) du boîtier de valve (1) sont appliquées, de préférence par projection ou par encliquetage, sur ce corps de base de valve (20, 25).

12. Procédé pour l'agencement étanche à la pression et de faible friction d'un tiroir de valve dans un boîtier d'une valve selon l'une des revendications 1 à 11, comprenant les étapes suivantes :
(a) enfoncement du tiroir de valve (2) dans l'échancrure intérieure (50) du boîtier de valve (1) en formant un ajustement à la presse,
(b) échauffement au moins du tiroir de valve (2) et du boîtier de valve (1) au-dessus du point de fluage du matériau de tiroir au moins de la zone (30) du tiroir de valve (2) adjacente au boîtier de valve (1) dans l'état assemblé,
(c) refroidissement.

13. Procédé selon la revendication 12, dans lequel la quantité de chaleur apportée dans l'étape (b) et/ou la durée temporelle de l'échauffement est choisie de telle sorte qu'après le refroidissement un intervalle d'une dimension désirée s'établit entre le tiroir de valve et le boîtier de valve.

14. Procédé pour réaliser un tiroir de valve (2) selon l'une des revendications 1 à 11 et/ou pour l'utilisation dans un procédé selon l'une ou l'autre des revendications 12 et 13, dans lequel le tiroir de valve est constitué par un corps de base de valve (20, 25),
**caractérisé en ce que** sur le corps de base de valve (20, 25), en particulier sur la ou les surfaces de portée de tiroir (25), on applique au moins une couche (30) d'un matériau, en particulier par projection et/ou par encliquetage, qui présente un module d'élasticité plus faible et un coefficient de dilatation thermique plus élevé que le matériau de boîtier de valve (10) adjacent à l'échancrure intérieure (50) du boîtier de valve (1).
